# EUROPEAN PATENT APPLICATION

(11) **EP 4 708 123 A1**
(43) Date of publication of application: **11.03.2026**
(21) Application number: 24825300.7
(22) Date of filing: 20.06.2024
(51) Int. Cl.: G06K 7/10

(54) **TARGET OBJECT DETERMINATION METHOD AND APPARATUS**

(30) Priority: 20.06.2023 CN 202310737510
(71) Applicant: HEMA (CHINA) CO., LTD., Shanghai 200135 (CN)
(72) Inventor: ZHAO, Zhenyu, Shanghai 200125 (CN); SONG, Enliang, Shanghai 200125 (CN)
(74) Representative: Bittner, Bernhard
(86) International application number: PCT/CN2024/100361
(87) International publication number: WO 2024/260412

(57) **Abstract**

Embodiments of this specification provide a target object determination method and apparatus. The method is applied to an object scanning device, and includes: determining, in response to an object selection instruction, a current location according to a positioning electronic label; determining, according to the current location and object attribute information of initial objects, a target object electronic label of a target object whose distance to the current location falls within a preset distance range; and sending a guiding instruction to the target object electronic label, to cause the target object electronic label to guide, according to the guiding instruction and in a preset guiding manner, a user to select the target object. According to the method, based on a handheld terminal location, an electronic label indicator corresponding to a commodity in an order within a specific distance range may be triggered to be turned on, thereby avoiding a problem of mutual interference caused when electronic label indicators corresponding to all commodities in a plurality of orders are turned on simultaneously in a case that picking is performed for the plurality of orders, and improving the commodity picking efficiency.

## Description

This application claims priority to Chinese Patent Application No. 202310737510.6, entitled "TARGET OBJECT DETERMINATION METHOD AND APPARATUS", and filed with the China National Intellectual Property Administration on June 20, 2023, which is incorporated herein by reference in its entirety.

### TECHNICAL FIELD

Embodiments of this specification relate to the field of computer technologies, and in particular, to a target object determination method.

### BACKGROUND

With the continuous development of science and technology, a PTL (Pick To Light) system is gradually popularized, and has been widely applied to picking manners of various industries such as retail and department stores, supermarkets, and medical fields at present. The PTL system is an assistant paperless picking system, and the principle of the PTL system is to replace a picking list with an electronic label installed at each goods location on a shelf to transmit order information to the electronic label under the control of a program, to guide a picker to perform picking work. After the picker completes the picking, the picker needs to press a confirmation button next to the electronic label to complete the picking work.

During actual application of an electronic label pick to light system, when picking is performed for a plurality of orders, electronic label indicators corresponding to to-be-picked goods are all turned on. As a result, pickers may interfere with each other during picking, reducing the picking efficiency. In addition, the picker also needs to manually control a handheld terminal to trigger the electronic label indicators corresponding to the to-be-picked goods. In this case, the picker needs to manually determine a trigger occasion. When the picker triggers, through the handheld terminal, to turn on the electronic label indicator when the picker is far away from the to-be-picked goods, the picker may miss the to-be-picked goods caused by an incapability of seeing the electronic label that is turned on due to an excessively large distance. In addition, when the picker triggers to turn on the electronic label indicator when the picker is excessively close to the to-be-picked goods, a problem that the picker has found the to-be-picked goods but the electronic label indicator is not turned on caused by system latency may occur. Therefore, an efficient picking method is urgently required.

### SUMMARY

In view of this, embodiments of this specification provide two target object determination methods. One or more embodiments of this specification further relates to two target object determination apparatuses, a computing device, a computer-readable storage medium, and a computer program, to resolve technical defects existing in the related art.

According to a first aspect of the embodiments of this specification, a target object determination method is provided, applied to an object scanning device, including:
determining, in response to an object selection instruction, a current location according to a positioning electronic label, where the object selection instruction carries object attribute information of initial objects;
determining, according to the current location and the object attribute information of the initial objects, a target object electronic label of a target object whose distance to the current location falls within a preset distance range, where the target object is any object in the initial objects; and
sending a guiding instruction to the target object electronic label, to cause the target object electronic label to guide, according to the guiding instruction and in a preset guiding manner, a user to select the target object, where the target object is an initial object corresponding to the target object electronic label.

According to a second aspect of the embodiments of this specification, a target object determination method is provided, applied to a server side, including:
sending an object selection instruction to an object scanning device, to determine a positioning electronic label that is determined by the object scanning device in response to the object selection instruction;
determining a current location of the object scanning device according to the positioning electronic label, where the object selection instruction carries object attribute information of initial objects;
determining, according to the current location of the object scanning device and the object attribute information of the initial objects, a target object electronic label of a target object whose distance to the current location of the object scanning device falls within a preset distance range, where the target object is any object in the initial objects; and
sending a guiding instruction to the target object electronic label, to cause the target object electronic label to guide, according to the guiding instruction and in a preset guiding manner, a user to select the target object, where the target object is an initial object corresponding to the target object electronic label.

According to a third aspect of the embodiments of this specification, a target object determination apparatus is provided, applied to an object scanning device, including:
a location determining module, configured to determine, in response to an object selection instruction, a current location according to a positioning electronic label, where the object selection instruction carries object attribute information of initial objects;
a label determining module, configured to determine, according to the current location and the object attribute information of the initial objects, a target object electronic label of a target object whose distance to the current location falls within a preset distance range, where the target object is any object in the initial objects; and
an object selecting module, configured to send a guiding instruction to the target object electronic label, to cause the target object electronic label to guide, according to the guiding instruction and in a preset guiding manner, a user to select the target object, where the target object is an initial object corresponding to the target object electronic label.

According to a fourth aspect of the embodiments of this specification, a target object determination apparatus is provided, applied to a server side, including:
a label determining module, configured to send an object selection instruction to an object scanning device, to determine a positioning electronic label that is determined by the object scanning device in response to the object selection instruction;
a location determining module, configured to determine a current location of the object scanning device according to the positioning electronic label, where the object selection instruction carries object attribute information of initial objects;
a target label determining module, configured to determine, according to the current location of the object scanning device and the object attribute information of the initial objects, a target object electronic label of a target object whose distance to the current location of the object scanning device falls within a preset distance range, where the target object is any object in the initial objects; and
an object determining module, configured to send a guiding instruction to the target object electronic label, to cause the target object electronic label to guide, according to the guiding instruction and in a preset guiding manner, a user to select the target object, where the target object is an initial object corresponding to the target object electronic label.

According to a fifth aspect of the embodiments of this specification, a computing device is provided, including:
a memory and a processor, where
the memory is configured to store computer-executable instructions, the processor is configured to execute the computer-executable instructions, and when the computer-executable instructions are executed by the processor, the steps of the foregoing target object determination method are implemented.

According to a sixth aspect of the embodiments of this specification, a computer-readable storage medium is provided, having computer-executable instructions stored therein, where when the instructions are executed by a processor, the steps of the foregoing target object determination method are implemented.

According to a seventh aspect of the embodiments of this specification, a computer program is provided, where when the computer program is executed in a computer, the computer is enabled to perform the steps of the foregoing target object determination method.

The target object determination method provided in an embodiment of this specification is applied to an object scanning device, and includes: determining, in response to an object selection instruction, a current location according to a positioning electronic label, where the object selection instruction carries object attribute information of initial objects; determining, according to the current location and the object attribute information of the initial objects, a target object electronic label of a target object whose distance to the current location falls within a preset distance range, where the target object is any object in the initial objects; and sending a guiding instruction to the target object electronic label, to cause the target object electronic label to guide, according to the guiding instruction and in a preset guiding manner, a user to select the target object, where the target object is an initial object corresponding to the target object electronic label.

Specifically, the target object determination method is applied to an object scanning device, and the current location is determined in response to the object selection instruction and according to the positioning electronic label, to accurately determine the target object electronic label of the target object whose distance to the current location falls within the preset distance range, so that control on the target object electronic label is implemented, and the target object electronic label guides, according to the guiding instruction and in the preset guiding manner, the user to efficiently select the target object. For example, in a commodity picking scenario, a handheld terminal location is determined according to a positioning electronic label, a commodity in an order whose distance to the handheld terminal location falls within a preset distance range is determined, and a guiding instruction is sent to an electronic label corresponding to the commodity, so that an electronic label indicator corresponding to the commodity is turned on. According to the method, based on a handheld terminal location, an electronic label indicator corresponding to a commodity in an order within a specific distance range may be triggered to be turned on, thereby avoiding problems of low picking efficiency and complex operations caused by an improper occasion at which a picker manually controls a handheld terminal to trigger the electronic label indicator to be turned on and avoiding a problem of mutual interference caused when electronic label indicators corresponding to all commodities in a plurality of orders are turned on simultaneously in a case that picking is performed for the plurality of orders, and improving the commodity picking efficiency.

### BRIEF DESCRIPTION OF THE DRAWINGS

FIG. 1 is a schematic diagram of a scenario in which two target object determination methods are applied to a commodity picking scenario according to an embodiment of this specification;
FIG. 2 is a flowchart of a target object determination method applied to an object scanning device according to an embodiment of this specification;
FIG. 3 is a flowchart of a target object determination method applied to a server side according to an embodiment of this specification;
FIG. 4 is a flowchart of a specific processing procedure of two target object determination methods according to an embodiment of this specification;
FIG. 5 is a schematic structural diagram of a target object determination apparatus applied to an object scanning device according to an embodiment of this specification;
FIG. 6 is a schematic structural diagram of a target object determination apparatus applied to a server side according to an embodiment of this specification; and
FIG. 7 is a structural block diagram of a computing device according to an embodiment of this specification.

### DETAILED DESCRIPTION

Many specific details are described in the following descriptions for ease of fully understanding this specification. However, this specification can be implemented in many other manners different from those described herein, and a person skilled in the art can make similar extension without departing from the concept of this specification. Therefore, this specification is not limited by specific implementations disclosed below.

The terms used in one or more embodiments of this specification are merely used to describe specific embodiments but are not intended to limit the one or more embodiments of this specification. The singular forms such as "a", "the", and "this" used in one or more embodiments of this specification and the appended claims are also intended to include plural forms, unless the context clearly indicates otherwise. It should be further understood that, the term "and/or" used in one or more embodiments of this specification includes any or all possible combinations of one or more associated listed items.

It should be understood that, although the terms such as "first" and "second" may be used in one or more embodiments of this specification to describe various information, the information should not be limited to these terms. These terms are merely intended to distinguish information of the same type. For example, without departing from the scope of one or more embodiments of this specification, first may also be referred to as second, and similarly, second may also be referred to as first. Depending on the context, for example, the term "if" used herein may be interpreted as "while", "when", or "in response to determining".

In addition, it should be noted that, user information (including but not limited to user device information, user personal information, and the like) and data (including but not limited to data for analysis, stored data, displayed data, and the like) that are involved in one or more embodiments of this specification are information and data that are authorized by a user or fully authorized by all parties, and collection, use, and processing of relevant data need to comply with relevant laws, regulations, and standards in relevant countries and regions. In addition, corresponding operation windows are provided, for the user to select authorization or rejection.

First, terms involved in one or more embodiments of this specification are explained.

PTL: This is a pick to light system, which is a commodity picking operating system in which an electronic label is installed on a shelf and corresponds to a storage location item, and a picker follow an indication of a turn-on state of an LED (Light Emitting Diode) built in the electronic label to a specified storage location, so as to take a commodity from the shelf and places the commodity in a carrier (a paper box, a logistics box, or a pallet) corresponding to a custom order.

Automation: Manual intervention is not required during operation of the system, and in a case of a common SOP (Standard Operating Procedure), turn-on and turn-off operations are performed automatically.

For the PTL, a picking storage location is generally required to be indicated in real time, to guide the picker to complete a sorting action quickly. PTL systems used in the industry are most designed for the logistics industry. According to situation of commodities in an order, electronic label indicators corresponding to all to-be-picked commodities in the order are turned on while a picking task is assigned. In a fresh food picking scenario, an electronic label also serves as a price label, and excessive picking indications will affect normal shopping of consumers. In addition, it is common to perform picking for a plurality of orders, and when electronic label indicators corresponding to to-be-picked commodities of orders of different pickers are turned on simultaneously, mutual influence may be generated.

Based on this, one or more embodiments of this specification provide two target object determination methods. According to the two methods, based on a handheld terminal location, an electronic label indicator corresponding to a commodity in an order within a specific distance range may be triggered to be turned on, thereby avoiding problems of low picking efficiency and complex operations caused by an improper occasion at which a picker manually controls a handheld terminal to trigger the electronic label indicator to be turned on, and avoiding a problem of mutual interference caused when electronic label indicators corresponding to all commodities in a plurality of orders are turned on simultaneously in a case that picking is performed for the plurality of orders, and improving the commodity picking efficiency.

In this specification, a target object determination method is provided, and this specification further relates to a target object determination apparatus, a computing device, and a computer-readable storage medium, which are described in detail one by one in the following embodiments.

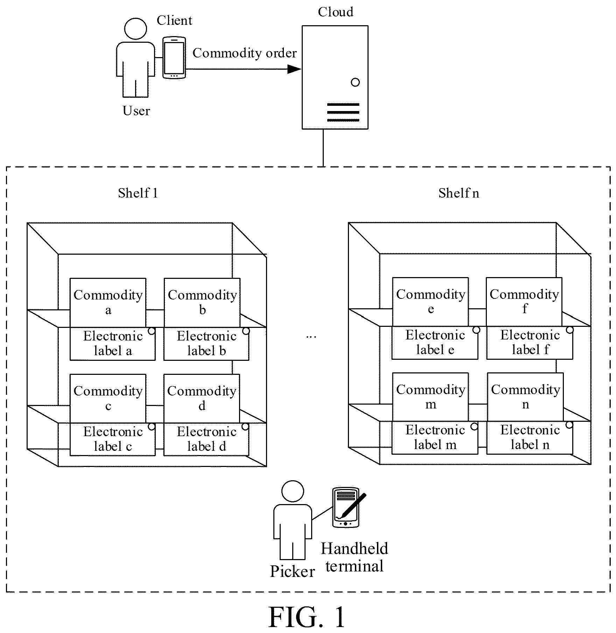

Referring to FIG. 1, FIG. 1 is a schematic diagram of a scenario in which two target object determination methods are applied to a commodity picking scenario according to an embodiment of this specification.

FIG. 1 shows a client and a cloud, where the client may be understood as a mobile phone, a notebook computer, a desktop computer, or the like. For ease of understanding, in the embodiments of this specification, the target object determination method is described in detail by using an example in which the client is a mobile phone.

Specifically, a user orders some commodities through the mobile phone to generate a commodity order, the mobile phone sends the commodity order to the cloud, and the cloud sends the commodity order to a handheld terminal necessary for picking by a picker, so that the picker can enter a commodity picking region based on the handheld terminal for picking.

In an actual application, the cloud may match a corresponding picker for the received commodity order. For example, the cloud receives two commodity orders: a commodity order 1 and a commodity order 2. The cloud sends the commodity order 1 to a picker 1 and sends picking prompt information to the picker 1, for example, sends a picking instruction to a mobile phone of the picker 1. The picker 1 randomly selects a handheld terminal a, and after an account and a keyword that correspond to the picker 1 are logged in to the handheld terminal a, the cloud sends the commodity order 1 to the handheld terminal a based on the account of the picker 1. Alternatively, the cloud sends the commodity order 2 to a picker 2 and sends picking prompt information to the picker 2. The picker 2 randomly selects a handheld terminal b, and after an account and a keyword that correspond to the picker 2 are logged in to the handheld terminal b, the cloud sends the commodity order 2 to the handheld terminal b based on the account of the picker 2.

For example, the commodity order 1 includes a commodity a and a commodity m, the cloud sends the commodity order 1 to the handheld terminal a to which the account of the picker 1 is logged in, and the picker 1 holds the handheld terminal a to enter a picking state: the picker 1 holds the handheld terminal a and walks in a commodity shelf region, a Bluetooth function unit configured by embedded software of the handheld terminal a enters a scanning mode to scan anchor beacon signals emitted by electronic labels that can emit an anchor beacon signal in the shelf region, and calculates a current location of the handheld terminal according to locations of the electronic labels and the anchor beacon signals (the current location of the handheld terminal may be calculated by the handheld terminal or may be calculated by the cloud). When a distance between the handheld terminal a and the commodity a is less than or equal to a preset distance range, for example, 2 meters, the handheld terminal or the cloud sends a guiding instruction to an electronic label a corresponding to the commodity a, to turn on an indicator corresponding to the electronic label a and help the picker 1 find the commodity a. After the commodity a is found, a commodity barcode of the commodity a is scanned for verification to verify whether the commodity a is a commodity in the commodity order. In a case that the verification succeeds, the handheld terminal or the cloud sends an end instruction to the electronic label a corresponding to the commodity a, to turn off the indicator corresponding to the electronic label a, and the picker 1 continues to walk in the commodity shelf region and finds all commodities in the commodity order by using the same method, so as to complete picking.

Based on this, by applying the target object determination method in this embodiment of this specification to a commodity picking scenario, the cloud receives a commodity order that is ordered by the user through the mobile phone and sends the commodity order to a handheld terminal. The current location of the handheld terminal is positioned by the handheld terminal or the cloud, distances between the current location of the handheld terminal and commodities are calculated, and electronic label indicators corresponding to commodities in the commodity order with distances falling within a set distance range are turned on, so that the picker can quickly and accurately determine locations of the commodities in the commodity order. In addition, when the picker scans a commodity barcode of a target commodity for picking, an electronic label indicator corresponding to the target commodity is turned off by the handheld terminal or the cloud, thereby implementing a non-perceptual operation of the picker and improving the picking efficiency of the picker.

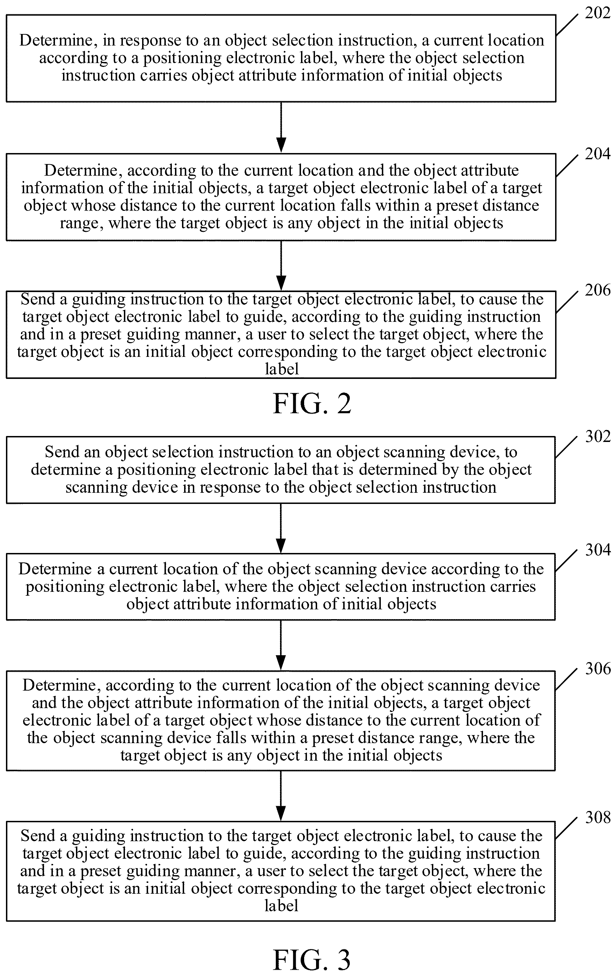

The following further describes the target object determination method with reference to FIG. 2. FIG. 2 shows a flowchart of a target object determination method applied to an object scanning device according to an embodiment of this specification, which specifically includes the following steps.

Step 202: Determine, in response to an object selection instruction, a current location according to a positioning electronic label, where the object selection instruction carries object attribute information of initial objects.

Specifically, the object scanning device may be understood as the handheld terminal having a Bluetooth function unit configured through embedded software in the foregoing embodiments, that is, a scanning device that can perform item outbound or inbound scanning.

In addition, in different actual application scenarios, the target object determination method has different objects. For example, when the target object determination method is applied to a warehouse logistics scenario, the object may be understood as an express package; and in a commodity picking scenario, the object may be understood as a to-be-picked commodity.

In a case that the object is understood as an express package, in response to the object selection instruction may be understood as that the handheld terminal responds to a selection instruction for an express package. In a case that the object is understood as a commodity, in response to the object selection instruction may be understood as that the handheld terminal responds to a selection instruction for a commodity. In the embodiments of this specification, the object selection instruction may be sent by a server side to the handheld terminal based on a commodity order.

The positioning electronic label may be understood as an electronic label that can emit an anchor beacon signal, which may be used as a Bluetooth beacon anchor to position a location of the handheld terminal. In an actual application, in a commodity picking scenario, each commodity has a corresponding electronic label, and to save costs, modules that can emit an anchor beacon signal may be disposed in only some electronic labels, to be implemented as positioning electronic labels. The electronic label may also be understood as an electronic price label, that is, an electronic label used for displaying a price of an item. At present, in an actual application, the electronic label may not only be used for displaying the price of the item, but also may be used for displaying a name, a quantity, a type, and the like of the item.

The object attribute information of the initial object includes, but not limited to, an object name of the initial object, an object location of the initial object, a label location of an initial object electronic label corresponding to the initial object, and the like. In a case that the initial object is a commodity, the object name of the initial object may be understood as a commodity name of the commodity in the commodity order; the object location of the initial object may be understood as a location of the commodity in the commodity order; and the label location of the initial object electronic label corresponding to the initial object may be understood as a label location of an electronic label corresponding to the commodity in the commodity order.

The example in which the object is a commodity is used, determining, in response to the object selection instruction, the current location according to the positioning electronic label may be understood as: the handheld terminal determines, in response to a commodity selection instruction sent by the server side, a current location of the handheld terminal according to the positioning electronic label.

In addition, in combination with the foregoing embodiments, in a case that the handheld terminal has a Bluetooth function unit configured through embedded software and the positioning electronic label may emit an anchor beacon signal, the handheld terminal may scan, by using the Bluetooth function unit configured through embedded software, the anchor beacon signal emitted by the positioning electronic label, to accurately and quickly calculate the current location of the handheld terminal according to a label location of the positioning electronic label and the scanned anchor beacon signal of the positioning electronic label. A specific implementation is as follows:
determining, in response to the object selection instruction, the current location according to the positioning electronic label includes:
scanning, in response to an object selection instruction sent by the server side, the anchor beacon signal emitted by the positioning electronic label, and determining the current location according to the label location of the positioning electronic label and the anchor beacon signal.

The example in which the object is a commodity is still used, scanning, in response to the object selection instruction sent by the server side, the anchor beacon signal emitted by the positioning electronic label, and determining the current location according to the label location of the positioning electronic label and the anchor beacon signal may be understood as: scanning, in response to the commodity selection instruction sent by the server side, an anchor beacon signal emitted by an electronic label that can emit an anchor beacon signal, and determining the current location according to a label location of the electronic label that can emit an anchor beacon signal and the anchor beacon signal.

According to the target object determination method provided in embodiments of this specification, the anchor beacon signal emitted by the positioning electronic label may be scanned in response to the object selection instruction sent by the server side, to accurately and quickly determine the current location according to the label location of the positioning electronic label and the anchor beacon signal.

In one or more embodiments of this specification, the current location of the handheld terminal may be accurately determined according to a distance between the handheld terminal and the positioning electronic label. A specific implementation is as follows:
determining the current location according to the label location of the positioning electronic label and the anchor beacon signal includes:
determining a distance to the positioning electronic label according to the label location of the positioning electronic label and the anchor beacon signal; and
determining the current location according to the distance to the positioning electronic label.

The label location of the positioning electronic label may be determined from the server side. For example, in the commodity picking scenario, the server side pre-stores a location of each positioning electronic label in a picking region, and the location may be understood as the label location of the positioning electronic label.

After the handheld terminal determines the label location of the positioning electronic label and the anchor beacon signal, a distance between the handheld terminal and the positioning electronic label may be calculated according to the label location of the positioning electronic label and signal strength of the anchor beacon signal; and the current location of the handheld terminal is finally determined based on the distance between the handheld terminal and the positioning electronic label.

In an actual application, there may be a plurality of positioning electronic labels, and in a case of a plurality of positioning electronic labels, for calculation of the current location of the handheld terminal, the handheld terminal needs to first calculate a distance between the handheld terminal and each positioning electronic label according to label locations of the plurality of positioning electronic labels and the anchor beacon signals, and then calculates the current location of the handheld terminal according to the distance between the handheld terminal and each positioning electronic label.

Calculation of the current location of the handheld terminal is described in detail below by using an example in which there are three positioning electronic labels.

Specifically, the handheld terminal may respectively determine distances to the three positioning electronic labels according to the label locations of the three positioning electronic labels and the signal strength of the anchor beacon signals. Then, according to the distances to the three positioning electronic labels, circles are respectively drawn by using the label locations of the three positioning electronic labels as circle centers and the distances to the positioning electronic labels as radii, and an intersection point of the three circles is determined as the current location of the handheld terminal.

According to the target object determination method provided in embodiments of this specification, the handheld terminal may determine the distance to the positioning electronic label according to the label location of the positioning electronic label and the anchor beacon signal, to accurately calculate the current location of the handheld terminal according to the distance to the positioning electronic label subsequently.

Step 204: Determine, according to the current location and the object attribute information of the initial objects, a target object electronic label of a target object whose distance to the current location falls within a preset distance range, where the target object is any object in the initial objects.

The preset distance range may be set according to an actual requirement. For example, the preset distance range may be set to 2 meters, 3 meters, or the like. The target object may be understood as a commodity in the preset distance range in a commodity order; and the target object electronic label may be understood as an electronic label corresponding to the commodity in the preset distance range in the commodity order, and the electronic label may be a positioning electronic label or may be a common electronic label.

Specifically, in a case that the object attribute information of the initial objects is object locations of the initial objects, a determining manner of the target object electronic label is as follows:
the object attribute information of the initial objects is object locations of the initial objects;
   and
correspondingly, determining, according to the current location and the object attribute information of the initial objects, the target object electronic label of the target object whose distance to the current location falls within the preset distance range includes:
   determining distances to the initial objects according to the current location and the object locations of the initial objects; and
   determining an initial object whose distance falls within the preset distance range as the target object, and determining the target object electronic label corresponding to the target object.

In a case that the object is a commodity, the object locations of the initial objects may be understood as commodity locations of initial commodities (that is, all commodities in the commodity order). As described above, in the commodity picking scenario, the commodity locations of the initial commodities may be understood as locations of the initial commodities in the picking region, and the object locations of the initial objects may be pre-recorded by the server side and sent to the handheld terminal through an object selection instruction in a case of sending the object selection instruction to the handheld terminal.

Still following the foregoing example, an example in which the initial objects are initial commodities and the preset distance range is 2 meters is used, determining distances to the initial objects according to the current location and the object locations of the initial objects; and determining an initial object whose distance falls within the preset distance range as the target object, and determining the target object electronic label corresponding to the target object may be understood as: determining, according to the current location and the locations of all initial commodities in the commodity order, a distance to each initial commodity in the commodity order; and determining an initial commodity whose distance falls within 2 meters in the commodity order as a target commodity, and determining a target commodity electronic label corresponding to the target commodity.

According to the target object determination method provided in embodiments of this specification, the target object electronic label of the target object whose distance to the current location falls within the preset distance range is properly and accurately determined according to the current location and the object attribute information of the initial objects.

Specifically, in a case that the object attribute information of the initial objects is label locations of initial object electronic labels corresponding to the initial objects, a determining manner of the target object electronic label is as follows:
correspondingly, determining, according to the current location and the object attribute information of the initial objects, the target object electronic label of the target object whose distance to the current location falls within the preset distance range includes:
determining distances to the initial object electronic labels according to the current location and the label locations of the initial object electronic labels; and
determining an initial object electronic label whose distance falls within the preset distance range as the target object electronic label of the target object, where the target object is an initial object corresponding to the target object electronic label.

In a case that the object is a commodity, the label locations of the initial object electronic labels may be understood as label locations of initial commodity (that is, all commodities in the commodity order) electronic labels. As described above, in the commodity picking scenario, the label locations of the initial commodity electronic labels may be understood as locations of the initial commodity electronic labels in the picking region, and the label locations of the initial object electronic labels may be pre-recorded by the server side and sent to the handheld terminal through an object selection instruction in a case of sending the object selection instruction to the handheld terminal.

Still following the foregoing example, an example in which the initial objects are initial commodities and the preset distance range is 2 meters is used, determining distances to the initial object electronic labels according to the current location and the label locations of the initial object electronic labels; and determining an initial object electronic label whose distance falls within the preset distance range as the target object electronic label of the target object may be understood as: determining, according to the current location and the label locations of all initial commodity electronic labels in the commodity order, a distance to each initial commodity electronic label in the commodity order, and determining an initial commodity electronic label whose distance falls within 2 meters in the commodity order as the target object electronic label of the target object.

According to the target object determination method provided in embodiments of this specification, the target object electronic label of the target object whose distance to the current location falls within the preset distance range is properly and accurately determined according to the current location and the object attribute information of the initial objects.

Step 206: Send a guiding instruction to the target object electronic label, to cause the target object electronic label to guide, according to the guiding instruction and in a preset guiding manner, a user to select the target object, where the target object is an initial object corresponding to the target object electronic label.

The guiding instruction may be understood as an instruction enabling the target object electronic label to provide special guidance to the user, for example a turn-on instruction or a voice broadcast instruction. In an actual application, different guiding instructions correspond to different preset guiding manners. For example, in a case that the guiding instruction is a turn-on instruction, the preset guiding manner may be understood as an indicator turn-on manner in a form; and in a case that the guiding instruction is a voice broadcast instruction, the preset guiding manner may be understood as a voice playback manner in a form.

An example in which the guiding instruction is a turn-on instruction and the preset guiding manner is an indicator turn-on manner is used to describe the step of sending a guiding instruction to the target object electronic label, to cause the target object electronic label to guide, according to the guiding instruction and in a preset guiding manner, a user to select the target object in detail.

Specifically, sending the guiding instruction to the target object electronic label, to cause the target object electronic label to guide, according to the guiding instruction and in the preset guiding manner, the user to select the target object may be understood as: the handheld terminal may send a turn-on instruction to an electronic label of a commodity whose distance falls within the preset distance range, so that the electronic label of the commodity whose distance falls within the preset distance range guides, according to the turn-on instruction, the user to select the commodity whose distance falls within the preset distance range by turning on an indicator.

In one or more embodiments of this specification, after the user is guided to select the target object, to enable the user to complete selection of the target object in a non-perceptual and brief manner so as to improve the picking efficiency, selection of the target object by the user is completed in a preset end manner. A specific implementation is as follows:
after sending the guiding instruction to the target object electronic label, to cause the target object electronic label to guide, according to the guiding instruction and in the preset guiding manner, the user to select the target object, the method further includes:
scanning the target object to obtain object attribute information of the target object;
performing verification on the target object according to the object attribute information of the target object; and
sending an end instruction to the target object electronic label corresponding to the target object in a case that the verification succeeds, to cause the target object electronic label corresponding to the target object to complete, according to the end instruction and in a preset end manner, selection of the target object by the user.

The object attribute information may be understood as attribute information of the commodity in the commodity order, for example, information like a product code or a price of the commodity. The preset end manner may be understood as a manner corresponding to the preset guiding manner. For example, if the preset guiding manner is to guide an indicator to be turned on, the preset end manner may be to guide the indicator to be turned off.

Specifically, scanning the target object to obtain object attribute information of the target object; performing verification on the target object according to the object attribute information of the target object; and sending an end instruction to the target object electronic label corresponding to the target object in a case that the verification succeeds, to cause the target object electronic label corresponding to the target object to complete, according to the end instruction and in a preset end manner, selection of the target object by the user may be understood as: the handheld terminal scans a commodity found according to the preset guiding manner to obtain commodity attribute information corresponding to the commodity, and performs verification on the commodity according to the corresponding commodity attribute information; and in a case that the verification succeeds, that is, when it is determined that the commodity is a commodity in the commodity order, sends the end instruction to an electronic label corresponding to the commodity, to cause the electronic label corresponding to the commodity to complete, according to the end instruction and in the preset end manner, for example, a manner of guiding an indicator to be turned off, selection of the commodity in the commodity order.

According to the target object determination method provided in embodiments of this specification, verification is performed on the commodity attribute information, and in a case that the verification succeeds, the end instruction is sent to the target object electronic label corresponding to the target object, to cause the target object electronic label corresponding to the target object to enable, according to the end instruction and in the preset end manner, the user to select the target object in a non-perceptual manner, thereby avoiding problems of complex operations and reduced efficiency.

In another embodiment, the handheld terminal may alternatively send label attribute information of the target object electronic label to the server side, and the server side sends a guiding instruction to the target object electronic label according to the label attribute information, to reduce a workload of the handheld terminal. A specific implementation is as follows:
after determining the target object electronic label of the target object whose distance to the current location falls within the preset distance range, the method further includes:
sending label attribute information of the target object electronic label to a server side, to cause the server side to send a guiding instruction to the target object electronic label according to the label attribute information, so as to cause the target object electronic label to guide, according to the guiding instruction and in a preset guiding manner, the user to select the target object.

The label attribute information may be understood as label location information; the guiding instruction may be understood as an instruction that may guide operations of the user; and the preset guiding manner may be understood as a specific guiding manner, for example, a guiding arrow, a guiding indicator, or the like.

In this way, sending label attribute information of the target object electronic label to a server side, to cause the server side to send a guiding instruction to the target object electronic label according to the label attribute information, so as to cause the target object electronic label to guide, according to the guiding instruction and in a preset guiding manner, the user to select the target object may be understood as: sending label location information of an electronic label of a commodity whose distance falls within the preset distance range to the server side, to cause the server side to send, according to the label location information, a guiding instruction to the electronic label corresponding to the commodity whose distance falls within the preset distance range, so as to cause the electronic label corresponding to the commodity whose distance falls within the preset distance range to guide, according to the guiding instruction and through a manner of a guiding arrow or a guiding indicator, the user to select the commodity whose distance falls within the preset distance range.

According to the target object determination method provided in embodiments of this specification, the handheld terminal sends the label attribute information of the target object electronic label to the server side, and the server side sends a guiding instruction to the target object electronic label according to the label attribute information, to reduce a workload of the handheld terminal.

In another embodiment, the handheld terminal may alternatively send object attribute information of the target object to the server side, and the server side sends an end instruction to the target object electronic label according to the object attribute information, to reduce a workload of the handheld terminal. A specific implementation is as follows:
after performing verification on the target object according to the object attribute information of the target object, the method further includes:
sending the object attribute information of the target object to a server side in a case that the verification succeeds, to cause the server side to send, according to the object attribute information of the target object, an end instruction to the target object electronic label corresponding to the target object, so as to cause the target object electronic label corresponding to the target object to complete, according to the end instruction and in a preset end manner, selection of the target object by the user.

The example in which the object is a commodity is still used, in a case that the verification succeeds, that is, the scanned commodity is determined as a target commodity in the commodity order, the handheld terminal sends commodity attribute information of the scanned target commodity to the server side, to cause the server side to send an end instruction to an electronic label corresponding to the target commodity, so as to cause the electronic label corresponding to the target commodity to complete, according to the end instruction and in a preset end manner, for example, a manner of guiding an indicator to be turned off, selection of the commodity in the commodity order.

According to the target object determination method provided in embodiments of this specification, in a case that the verification succeeds, the object attribute information of the target object is sent to the server side, to cause the server side to send, according to the object attribute information of the target object, the end instruction to the target object electronic label corresponding to the target object, so that a workload of the handheld terminal is reduced, and the target object electronic label corresponding to the target object causes, according to the end instruction and in the preset end manner, the user to select the target object in a non-perceptual manner, thereby avoiding problems of complex operations and reduced efficiency.

In one or more embodiments of this specification, an example in which the preset guiding manner is to turn on a guiding indicator is used to accurately guide the user to select the target object. A specific implementation is as follows:
sending the guiding instruction to the target object electronic label, to cause the target object electronic label to guide, according to the guiding instruction and in the preset guiding manner, the user to select the target object includes:
sending the guiding instruction to the target object electronic label, to cause the target object electronic label to turn on, according to the guiding instruction, a guiding indicator to guide the user to select the target object.

In an actual application, when a plurality of orders exist in the same region, different colors may be set for each handheld terminal for turning on indicators, that is, guiding indicators of different colors may be turned on to guide the user to select the target object. For example, a guiding indicator that may be turned on in red is configured for a handheld terminal a, and when the handheld terminal a sends a guiding instruction to the target object electronic label, the corresponding target object electronic label turns on a red indicator. Correspondingly, a guiding indicator that may be turned on in blue is configured for a handheld terminal b, and when the handheld terminal b sends a guiding instruction to the target object electronic label, the corresponding target object electronic label turns on a blue indicator. In addition, when one electronic label has only one indicator and a same commodity is included in a plurality of orders, the indicator of the electronic label may alternately flicker in different colors, so that mutual interference is not generated when a plurality of users select target objects.

According to the target object determination method provided in embodiments of this specification, the guiding instruction is sent to the target object electronic label, to cause the target object electronic label to guide, according to the guiding instruction and in the preset guiding manner, the user to select the target object quickly and efficiently.

Referring to FIG. 3, FIG. 3 is a flowchart of a target object determination method applied to a server side according to an embodiment of this specification.

Step 302: Send an object selection instruction to an object scanning device, to determine a positioning electronic label that is determined by the object scanning device in response to the object selection instruction.

In a commodity picking scenario, an example in which an object is a commodity is used, sending an object selection instruction to an object scanning device, to determine a positioning electronic label that is determined by the object scanning device in response to the object selection instruction may be understood as: sending a commodity order selection instruction to a handheld terminal, to determine an electronic label that may emit an anchor beacon signal and that is determined by the handheld terminal in response to the commodity order selection instruction.

During specific implementation, the object selection instruction is sent to the object scanning device, to determine the positioning electronic label that is determined by the object scanning device in response to the object selection instruction, so that a current location of the handheld terminal can be accurately determined according to the positioning electronic label.

Step 304: Determine a current location of the object scanning device according to the positioning electronic label, where the object selection instruction carries object attribute information of initial objects.

The example in which an object is a commodity is still used, determining the current location of the object scanning device according to the positioning electronic label may be understood as: determining the current location of the handheld terminal according to the electronic label that can emit an anchor beacon signal, where the commodity order selection instruction carries locations of commodities in a commodity order.

During specific implementation, the handheld terminal scans and sends the anchor beacon signal emitted by the positioning electronic label to the server side, to accurately and quickly calculate the current location of the handheld terminal according to a label location of the positioning electronic label and the anchor beacon signal emitted by the positioning electronic label. A specific implementation is as follows:
determining the current location of the object scanning device according to the positioning electronic label includes:
determining, according to a label location of the positioning electronic label and an anchor beacon signal emitted by the positioning electronic label, a distance between the object scanning device and the positioning electronic label, where the anchor beacon signal emitted by the positioning electronic label is scanned and sent by the object scanning device; and
determining the current location of the object scanning device according to the distance between the object scanning device and the positioning electronic label.

Specifically, a manner of determining the current location of the object scanning device herein is similar to the manner of determining the current location in the foregoing embodiments applied to an object scanning device, but the current location is determined in the server side herein, and details are not described herein again.

According to the target object determination method provided in embodiments of this specification, the distance between the object scanning device and the positioning electronic label can be determined according to the label location of the positioning electronic label and the anchor beacon signal emitted by the positioning electronic label, to accurately and quickly determine the current location of the object scanning device according to the distance to the positioning electronic label.

Step 306: Determine, according to the current location of the object scanning device and the object attribute information of the initial objects, a target object electronic label of a target object whose distance to the current location of the object scanning device falls within a preset distance range, where the target object is any object in the initial objects.

Specifically, in a case that the object attribute information of the initial objects is object locations of the initial objects, a determining manner of the target object electronic label is as follows:
the object attribute information of the initial objects is object locations of the initial objects;
   and
correspondingly, determining, according to the current location of the object scanning device and the object attribute information of the initial objects, the target object electronic label of the target object whose distance to the current location of the object scanning device falls within the preset distance range includes:
   determining distances between the current location of the object scanning device and the initial objects according to the current location of the object scanning device and the object locations of the initial objects; and
   determining an initial object whose distance falls within the preset distance range as the target object, and determining the target object electronic label corresponding to the target object.

The manner of determining the target object electronic label herein is similar to the manner of determining the target object electronic label in the foregoing embodiments applied to an object scanning device, and details are not described herein again.

According to the target object determination method provided in embodiments of this specification, the target object electronic label of the target object whose distance to the current location of the object scanning device falls within the preset distance range is properly and accurately determined according to the current location of the object scanning device and the object attribute information of the initial objects.

Specifically, in a case that the object attribute information of the initial objects is label locations of initial object electronic labels corresponding to the initial objects, a determining manner of the target object electronic label is as follows:
correspondingly, determining, according to the current location of the object scanning device and the object attribute information of the initial objects, the target object electronic label of the target object whose distance to the current location of the object scanning device falls within the preset distance range includes:
determining distances between the current location of the object scanning device and the initial object electronic labels according to the current location of the object scanning device and the label locations of the initial object electronic labels; and
determining an initial object electronic label whose distance falls within the preset distance range as the target object electronic label of the target object, where the target object is an initial object corresponding to the target object electronic label.

The manner of determining the target object electronic label herein is similar to the manner of determining the target object electronic label in the foregoing embodiments applied to an object scanning device, and details are not described herein again.

According to the target object determination method provided in embodiments of this specification, the target object electronic label of the target object whose distance to the current location of the object scanning device falls within the preset distance range is properly and accurately determined according to the current location of the object scanning device and the object attribute information of the initial objects.

Step 308: Send a guiding instruction to the target object electronic label, to cause the target object electronic label to guide, according to the guiding instruction and in a preset guiding manner, a user to select the target object, where the target object is an initial object corresponding to the target object electronic label.

The object selection method herein is similar to the object selection method in the foregoing embodiments applied to an object scanning device, and details are not described herein again.

In one or more embodiments of this specification, after the user is guided to select the target object, to enable the user to complete selection of the target object in a non-perceptual and brief manner so as to improve the picking efficiency, selection of the target object by the user is completed in a preset end manner. A specific implementation is as follows:
after sending the guiding instruction to the target object electronic label, to cause the target object electronic label to guide, according to the guiding instruction and in the preset guiding manner, the user to select the target object, the method further includes:
receiving object attribute information of the target object sent by the object scanning device;
performing verification on the target object according to the object attribute information of the target object; and
sending an end instruction to the target object electronic label corresponding to the target object in a case that the verification succeeds, to cause the target object electronic label corresponding to the target object to complete, according to the end instruction and in a preset end manner, selection of the target object by the user.

In the commodity picking scenario, the example in which an object is a commodity is used, receiving object attribute information of the target object sent by the object scanning device; performing verification on the target object according to the object attribute information of the target object; and sending an end instruction to the target object electronic label corresponding to the target object in a case that the verification succeeds, to cause the target object electronic label corresponding to the target object to complete, according to the end instruction and in a preset end manner, selection of the target object by the user may be understood as: receiving commodity attribute information of the commodity in the commodity order sent by the handheld terminal; performing verification on the commodity according to the commodity attribute information; and in a case that the verification succeeds, that is, when it is determined that the commodity is a commodity in the commodity order, sending the end instruction to an electronic label corresponding to the commodity, to cause the electronic label corresponding to the commodity to complete, according to the end instruction and in the preset end manner, for example, a manner of guiding an indicator to be turned off, selection of the commodity in the commodity order.

According to the target object determination method provided in embodiments of this specification, verification is performed on the commodity attribute information, and in a case that the verification succeeds, the end instruction is sent to the target object electronic label corresponding to the target object, to cause the target object electronic label corresponding to the target object to enable, according to the end instruction and in the preset end manner, the user to select the target object in a non-perceptual manner, thereby avoiding problems of complex operations and reduced efficiency.

In another embodiment, the server side may alternatively send verification success notification to the handheld terminal, and the handheld terminal sends a guiding instruction to the target object electronic label according to the verification success notification, to reduce a workload of the server side. A specific implementation is as follows:
after performing verification on the target object according to the object attribute information of the target object, the method includes:
in a case that the verification succeeds, sending verification success notification for the target object to the object scanning device, to cause the object scanning device to send, according to the verification success notification, an end instruction to the target object electronic label corresponding to the target object, so as to cause target object electronic label corresponding to the target object to complete, according to the end instruction and in a preset end manner, selection of the target object by the user.

In the commodity picking scenario, the example in which an object is a commodity is used, in a case that the verification succeeds, the verification success notification for a target commodity in the commodity order is sent to the handheld terminal, to cause the handheld terminal to send, according to the verification success notification, the end instruction to an electronic label corresponding to the target commodity, so as to cause electronic label corresponding to the target commodity to complete, according to the end instruction and in the preset end manner, for example, a manner of guiding an indicator to be turned off, selection of the commodity in the commodity order.

According to the target object determination method provided in embodiments of this specification, the verification success notification is sent to the handheld terminal in a case that the verification succeeds, to cause the handheld terminal to send the guiding instruction to the target object electronic label according to the verification success notification, thereby reducing a workload of the server side.

In one or more embodiments of this specification, an example in which the preset guiding manner is to turn on a guiding indicator is used to accurately guide the user to select the target object. A specific implementation is as follows:
sending the guiding instruction to the target object electronic label, to cause the target object electronic label to guide, according to the guiding instruction and in the preset guiding manner, the user to select the target object includes:
sending the guiding instruction to the target object electronic label, to cause the target object electronic label to turn on, according to the guiding instruction, a guiding indicator to guide the user to select the target object.

The implementation herein is similar to the implementation in the foregoing embodiments applied to an object scanning device, and details are not described herein again.

Based on this, according to the target object determination method provided in embodiments of this specification, the guiding instruction is sent to the target object electronic label, to cause the target object electronic label to guide, according to the guiding instruction and in the preset guiding manner, the user to select the target object quickly and efficiently.

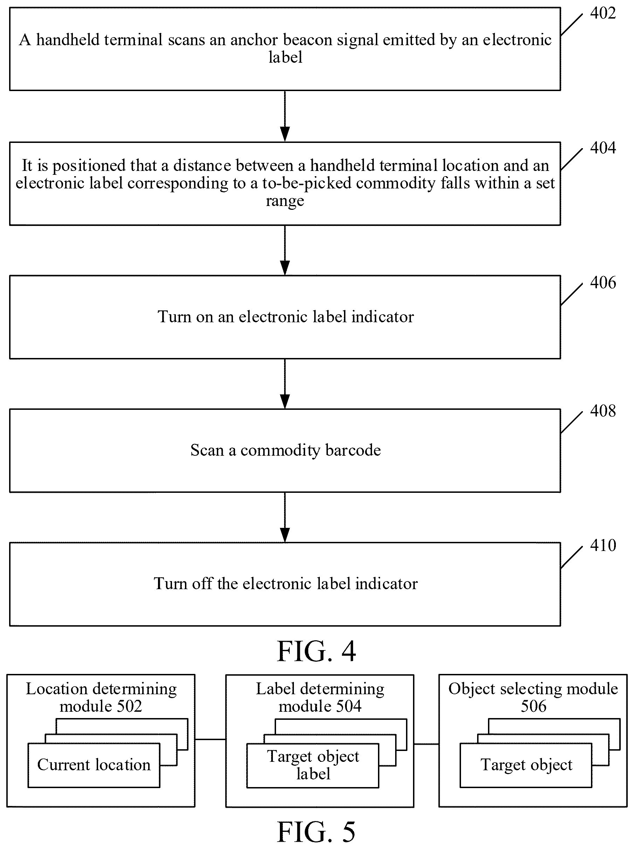

Referring to FIG. 4, FIG. 4 is a flowchart of a specific processing procedure of two target object determination methods according to an embodiment of this specification.

Step 402: A handheld terminal scans an anchor beacon signal emitted by an electronic label.

For ease of understanding, a specific processing procedure of the target object determination method is described in detail by using a specific scenario in which a picker picks a commodity in a warehouse shelf.

The handheld terminal may be understood as the object scanning device in the foregoing embodiments; and the electronic label may be understood as the positioning electronic label in the foregoing embodiments.

Specifically, before the handheld terminal scans the anchor beacon signal emitted by the electronic label, a Bluetooth broadcast function is added to the electronic label through a PTL system, so that the electronic label may be used as a Bluetooth beacon anchor to position the handheld terminal that the picker needs to use for picking.

In an actual application, after receiving a commodity order, the picker holds the handheld terminal and walks in a commodity shelf region, and a Bluetooth function unit configured through embedded software of the handheld terminal enters a scanning mode to scan the anchor beacon signals emitted by the electronic labels in the shelf region.

Step 404: It is positioned that a distance between a handheld terminal location and an electronic label corresponding to a to-be-picked commodity falls within a set range.

The handheld terminal location may be understood as the current location of the object scanning device in the foregoing embodiments; and the to-be-picked commodity may be understood as the initial object in the foregoing embodiments.

Specifically, according to the foregoing embodiments, a current location of the handheld terminal is positioned according to the anchor beacon signal and a location of the positioning electronic label, to calculate whether the distance between the handheld terminal location and the electronic label corresponding to the to-be-picked commodity falls within the set range, where a location of the electronic label corresponding to the to-be-picked commodity may be determined according to a commodity layout drawing determined according to relative location relationship between shelves, commodities and electronic labels corresponding to the commodities.

In addition, the handheld terminal location may be positioned by the handheld terminal or may be positioned by a server side. Similarly, the distance between the handheld terminal location and the electronic label corresponding to the to-be-picked commodity may be calculated by the handheld terminal or may be calculated by the server side.

Step 406: Turn on an electronic label indicator.

Turning on an electronic label indicator may be understood as the preset guiding manner in the foregoing embodiments.

In a case that the distance between the handheld terminal location and the electronic label corresponding to the to-be-picked commodity falls within the set range, the electronic label indicator corresponding to the to-be-picked commodity within the set range is turned on in the foregoing manner in which the handheld terminal sends a guiding instruction or the server side sends a guiding instruction, and a target commodity is found according to the turned-on electronic label indicator.

Specifically, the electronic label indicator may be triggered, through a Bluetooth signal of the handheld terminal, to be turned on, or the electronic label may be notified by a cloud (that is, the server side) in a wired or wireless communication manner to turn on the electronic label indicator.

Step 408: Scan a commodity barcode.

The commodity barcode may be understood as the object attribute information of the target object in the foregoing embodiments.

The handheld terminal scans a commodity barcode of the target commodity to obtain commodity attribute information of the commodity, and further performs verification on the commodity attribute information with commodities in the commodity order. In a case that the verification succeeds, the electronic label indicator corresponding to the target commodity is turned off.

Step 410: Turn off the electronic label indicator.

The turning off the electronic label indicator may be understood as the preset end manner in the foregoing embodiments.

Specifically, the electronic label indicator may be triggered, through a Bluetooth signal of the handheld terminal, to be turned off, or the electronic label may be notified by the cloud (that is, the server side) in a wired or wireless communication manner to turn off the electronic label indicator.

According to the target object determination method provided in embodiments of this specification, problems of low picking efficiency and complex operations caused by an improper occasion at which a picker manually controls a handheld terminal to trigger the electronic label indicator to be turned on are avoided, and a problem of mutual interference caused when electronic label indicators corresponding to all commodities in a plurality of orders are turned on simultaneously in a case that picking is performed for the plurality of orders is avoided, so that the picker can obtain a picking indication of the PTL system without any extra operation and in a non-perceptual manner, thereby significantly improving the use experience and improving the picking efficiency.

Corresponding to the foregoing method embodiments, this specification further provides a target object determination apparatus embodiment. FIG. 5 is a schematic structural diagram of a target object determination apparatus applied to an object scanning device according to an embodiment of this specification. As shown in FIG. 5, the apparatus includes:
a location determining module 502, configured to determine, in response to an object selection instruction, a current location according to a positioning electronic label, where the object selection instruction carries object attribute information of initial objects;
a label determining module 504, configured to determine, according to the current location and the object attribute information of the initial objects, a target object electronic label of a target object whose distance to the current location falls within a preset distance range, where the target object is any object in the initial objects; and
an object selecting module 506, configured to send a guiding instruction to the target object electronic label, to cause the target object electronic label to guide, according to the guiding instruction and in a preset guiding manner, a user to select the target object, where the target object is an initial object corresponding to the target object electronic label.

Optionally, the location determining module 502 is further configured to:
scan, in response to an object selection instruction sent by a server side, an anchor beacon signal emitted by the positioning electronic label, and determine the current location according to a label location of the positioning electronic label and the anchor beacon signal.

Optionally, the location determining module 502 is further configured to:
determine a distance to the positioning electronic label according to the label location of the positioning electronic label and the anchor beacon signal; and
determine the current location according to the distance to the positioning electronic label.

Optionally, the label determining module 504 is further configured to:
determine distances to the initial objects according to the current location and object locations of the initial objects; and
determine an initial object whose distance falls within the preset distance range as the target object, and determine the target object electronic label corresponding to the target object.

Optionally, the label determining module 504 is further configured to:
determine distances to initial object electronic labels according to the current location and label locations of the initial object electronic labels; and
determine an initial object electronic label whose distance falls within the preset distance range as the target object electronic label of the target object, where the target object is an initial object corresponding to the target object electronic label.

Optionally, the apparatus further includes:
an information sending module, configured to:
send label attribute information of the target object electronic label to a server side, to cause the server side to send a guiding instruction to the target object electronic label according to the label attribute information, so as to cause the target object electronic label to guide, according to the guiding instruction and in a preset guiding manner, the user to select the target object.

Optionally, the apparatus further includes:
an object scanning module, configured to:
scan the target object to obtain object attribute information of the target object;
perform verification on the target object according to the object attribute information of the target object; and
send an end instruction to the target object electronic label corresponding to the target object in a case that the verification succeeds, to cause the target object electronic label corresponding to the target object to complete, according to the end instruction and in a preset end manner, selection of the target object by the user.

Optionally, the apparatus further includes:
an object information sending module, configured to:
send the object attribute information of the target object to a server side in a case that the verification succeeds, to cause the server side to send, according to the object attribute information of the target object, an end instruction to the target object electronic label corresponding to the target object, so as to cause the target object electronic label corresponding to the target object to complete, according to the end instruction and in a preset end manner, selection of the target object by the user.

Optionally, the object selecting module 506 is further configured to:
send the guiding instruction to the target object electronic label, to cause the target object electronic label to turn on, according to the guiding instruction, a guiding indicator to guide the user to select the target object.

Specifically, the target object determination apparatus is applied to an object scanning device, the current location is determined in response to the object selection instruction and according to the positioning electronic label, and the target object electronic label of the target object whose distance to the current location falls within the preset distance range is determined, so that the target object electronic label whose distance to the object scanning device falls within a specific distance range can be calculated based on a location of the object scanning device, and the guiding instruction is sent to the target object electronic label, to cause the target object electronic label to guide, according to the guiding instruction and in the preset guiding manner, the user to select the target object. Through the apparatus, the target object electronic label within the specific distance range may be guided according to the location of the object scanning device to send guidance in the preset guiding manner, thereby avoiding problems of low picking efficiency and complex operations caused by an improper occasion at which a picker manually controls a handheld terminal to trigger an electronic label indicator to be turned on, avoiding a problem of mutual interference caused when electronic label indicators corresponding to all commodities in a plurality of orders are turned on simultaneously in a case that picking is performed for the plurality of orders, and improving the commodity picking efficiency.

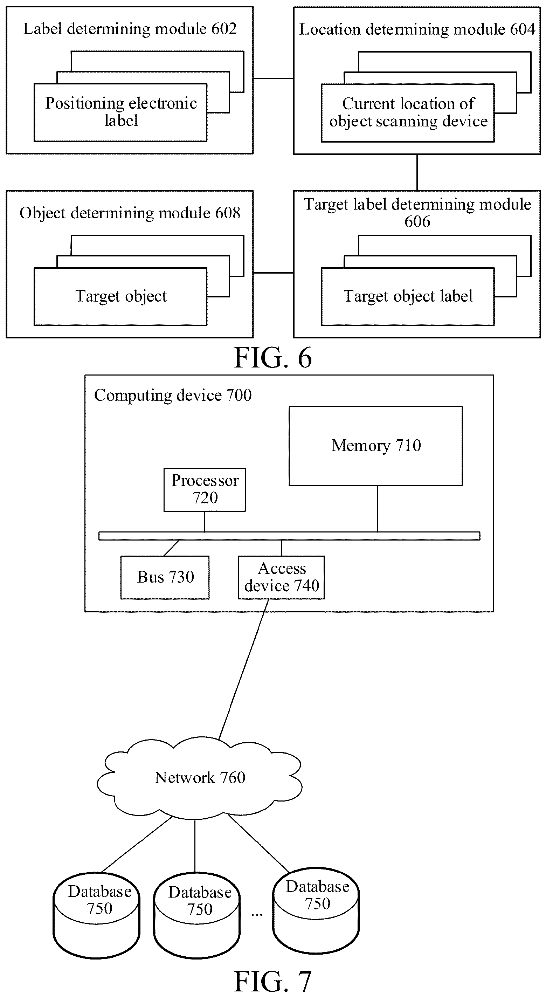

Corresponding to the foregoing method embodiments, this specification further provides a target object determination apparatus embodiment. FIG. 6 is a schematic structural diagram of a target object determination apparatus applied to a server side according to an embodiment of this specification. As shown in FIG. 6, the apparatus includes:
a label determining module 602, configured to send an object selection instruction to an object scanning device, to determine a positioning electronic label that is determined by the object scanning device in response to the object selection instruction;
a location determining module 604, configured to determine a current location of the object scanning device according to the positioning electronic label, where the object selection instruction carries object attribute information of initial objects;
a target label determining module 606, configured to determine, according to the current location of the object scanning device and the object attribute information of the initial objects, a target object electronic label of a target object whose distance to the current location of the object scanning device falls within a preset distance range, where the target object is any object in the initial objects; and
an object determining module 608, configured to send a guiding instruction to the target object electronic label, to cause the target object electronic label to guide, according to the guiding instruction and in a preset guiding manner, a user to select the target object, where the target object is an initial object corresponding to the target object electronic label.

Optionally, the label determining module 602 is further configured to:
determine distances between the current location of the object scanning device and the initial objects according to the current location of the object scanning device and object locations of the initial objects; and
determine an initial object whose distance falls within the preset distance range as the target object, and determine the target object electronic label corresponding to the target object.

Optionally, the label determining module 602 is further configured to:
determine distances between the current location of the object scanning device and initial object electronic labels according to the current location of the object scanning device and label locations of the initial object electronic labels; and
determine an initial object electronic label whose distance falls within the preset distance range as the target object electronic label of the target object, where the target object is an initial object corresponding to the target object electronic label.

Optionally, the location determining module 604 is further configured to:
determine, according to a label location of the positioning electronic label and an anchor beacon signal emitted by the positioning electronic label, a distance between the object scanning device and the positioning electronic label, where the anchor beacon signal emitted by the positioning electronic label is scanned and sent by the object scanning device; and
determine the current location of the object scanning device according to the distance between the object scanning device and the positioning electronic label.

Optionally, the apparatus further includes:
an information receiving module, configured to:
receive object attribute information of the target object sent by the object scanning device, and send the guiding instruction to the target object electronic label corresponding to the target object according to the object attribute information of the target object, to cause the target object electronic label corresponding to the target object to guide, according to the guiding instruction and in the preset guiding manner, the user to select the target object.

Optionally, the apparatus further includes:
an object information receiving module, configured to:
receive object attribute information of the target object sent by the object scanning device;
perform verification on the target object according to the object attribute information of the target object; and
send an end instruction to the target object electronic label corresponding to the target object in a case that the verification succeeds, to cause the target object electronic label corresponding to the target object to complete, according to the end instruction and in a preset end manner, selection of the target object by the user.

Optionally, the apparatus further includes:
a notification sending module, configured to:
in a case that the verification succeeds, send verification success notification for the target object to the object scanning device, to cause the object scanning device to send, according to the verification success notification, an end instruction to the target object electronic label corresponding to the target object, so as to cause the target object electronic label corresponding to the target object to complete, according to the end instruction and in a preset end manner, selection of the target object by the user.

Optionally, the object determining module 608 is further configured to:
send the guiding instruction to the target object electronic label, to cause the target object electronic label to turn on, according to the guiding instruction, a guiding indicator to guide the user to select the target object.

Specifically, the target object determination apparatus is applied to a server, and the object selection instruction is sent to the object scanning device, to determine the positioning electronic label that is determined by the object scanning device in response to the object selection instruction; the current location of the object scanning device is determined according to the positioning electronic label; the target object electronic label of the target object whose distance to the current location of the object scanning device falls within the preset distance range is determined according to the current location of the object scanning device and the object attribute information of the initial objects; and the guiding instruction is sent to the target object electronic label, to cause the target object electronic label to guide, according to the guiding instruction and in the preset guiding manner, the user to select the target object. Through the apparatus, the target object electronic label within a specific distance range may be guided according to the location of the object scanning device to send guidance in the preset guiding manner, thereby avoiding problems of low picking efficiency and complex operations caused by an improper occasion at which a picker manually controls a handheld terminal to trigger an electronic label indicator to be turned on, avoiding a problem of mutual interference caused when electronic label indicators corresponding to all commodities in a plurality of orders are turned on simultaneously in a case that picking is performed for the plurality of orders, and improving the commodity picking efficiency.

The foregoing description is an exemplary solution of the target object determination apparatus of this embodiment. It should be noted that, the technical solution of the target object determination apparatus and the technical solution of the foregoing target object determination method belong to the same concept, and for detailed content that is not described in detail in the technical solution of the target object determination apparatus, reference may be made to the descriptions of the technical solution of the foregoing target object determination method.

FIG. 7 is a structural block diagram of a computing device 700 according to an embodiment of this specification. Components of the computing device 700 include but not limited to a memory 710 and a processor 720. The processor 720 and the memory 710 are connected through a bus 730, and a database 750 is configured to store data.

The computing device 700 further includes an access device 740, and the access device 740 enables the computing device 700 to perform communication through one or more networks 760. Examples of the networks include a public switched telephone network (PSTN, Public Switched Telephone Network), a local area network (LAN), a wide area network (WAN), a personal area network (PAN), or a combination of communication networks such as the Internet. The access network 740 may include one or more of wired or wireless network interfaces (for example, a network interface card (NIC)) of any types, such as an IEEE802.11 wireless local area network (WLAN) wireless interface, a worldwide interoperability for microwave access (Wi-MAX) interface, an Ethernet interface, a universal serial bus (USB) interface, a cellular network interface, a Bluetooth interface, and a near field communication (NFC) interface.

In an embodiment of this specification, the foregoing components and other components that are not shown in FIG. 7 of the computing device 700 may also be connected to each other, for example, connected through a bus. It should be understood that, the structural block diagram of the computing device shown in FIG. 7 is merely exemplary, and is not intended to limit the scope of this specification. A person skilled in the art may add or replace other components according to a requirement.

The computing device 700 may be a stationary or mobile computing device of any type, including a mobile computer, a mobile computing device (for example, a tablet computer, a person digital assistant, a laptop computer, a notebook computer, or a netbook), a mobile phone (for example, a smartphone), a wearable computing device (for example, a smartwatch or smart glasses), a mobile device of another type, or a stationary computing device like a desktop computer or a personal computer (PC). The computing device 700 may alternatively be a mobile or stationary server.

The processor 720 is configured to perform the following computer-executable instructions, and when the computer-executable instructions are executed by the processor, the steps of the foregoing target object determination method are implemented.

The foregoing description is an exemplary solution of the computing device of this embodiment. It should be noted that, the technical solution of the computing device and the technical solution of the foregoing target object determination method belong to the same concept, and for detailed content that is not described in detail in the technical solution of the computing device, reference may be made to the descriptions of the technical solution of the foregoing target object determination method.

An embodiment of this specification further provides a computer-readable storage medium, having computer-executable instructions stored therein, where when the computer-executable instructions are executed by a processor, the steps of the foregoing target object determination method are implemented.

The foregoing description is an exemplary solution of the computer-readable storage medium of this embodiment. It should be noted that, the technical solution of the storage medium and the technical solution of the foregoing target object determination method belong to the same concept, and for detailed content that is not described in detail in the technical solution of the storage medium, reference may be made to the descriptions of the technical solution of the foregoing target object determination method.

An embodiment of this specification further provides a computer program, where when the computer program is executed in a computer, the computer is caused to perform the steps of the foregoing target object determination method.

The foregoing description is an exemplary solution of the computer program of this embodiment. It should be noted that, the technical solution of the computer program and the technical solution of the foregoing target object determination method belong to the same concept, and for detailed content that is not described in detail in the technical solution of the computer program, reference may be made to the descriptions of the technical solution of the foregoing target object determination method.

Specific embodiments of this specification are described above. Other embodiments are within the scope of the appended claims. In some cases, the actions or steps recorded in the claims may be performed in sequences different from those in the embodiments and an expected result may still be achieved. In addition, the processes depicted in the accompanying drawings are not necessarily performed in the specific sequence or successively to achieve an expected result. In some implementations, multitasking and parallel processing may be feasible or beneficial.

The computer instructions include computer program code. The computer program code may be in a source code form, an object code form, executable file or some intermediate forms, or the like. The computer-readable medium may include: any entity or apparatus that can carry the computer program code, a recording medium, a USB flash drive, a removable hard disk, a magnetic disk, an optical disc, a computer memory, a read-only memory (ROM), a random access memory (RAM), an electric carrier signal, a telecommunication signal and a software distribution medium, or the like. It should be noted that, the content contained in the computer-readable medium may be appropriately increased or decreased according to the requirements of patent practice. For example, in some regions, according to patent practice, the computer-readable medium does not include an electric carrier signal and a telecommunication signal.

It should be noted that, for ease of description, the foregoing method embodiments are described as a series of action combinations. However, a person skilled in the art should learn that the embodiments of this specification are not limited to the described action sequences because some steps may be performed in another sequence or performed at the same time according to the embodiments of this specification. In addition, a person skilled in the art also needs to learn that the embodiments described in this specification are all preferred embodiments, and the involved action and module are not necessarily required for the embodiments of this specification.

In the foregoing embodiments, the descriptions of each embodiment have different focuses, and for a part that is not described in detail in an embodiment, reference may be made to the related descriptions of other embodiments.

The preferred embodiments of this specification disclosed above are merely used for helping describe this specification. Optional embodiments do not describe all the details, and are not intended to limit the present invention to the specific implementations described. Apparently, many modifications and changes may be made according to the content of the embodiments of this specification. These embodiments are selected and described in this specification for better explaining the principles and actual applications of this specification, so that a person skilled in the art can better understand and use this specification. This specification is limited only by the claims and a full scope and equivalents thereof.

## Claims

1. A target object determination method, applied to an object scanning device, comprising:
determining, in response to an object selection instruction, a current location according to a positioning electronic label, wherein the object selection instruction carries object attribute information of initial objects;
determining, according to the current location and the object attribute information of the initial objects, a target object electronic label of a target object whose distance to the current location falls within a preset distance range, wherein the target object is any object in the initial objects; and
sending a guiding instruction to the target object electronic label, to cause the target object electronic label to guide, according to the guiding instruction and in a preset guiding manner, a user to select the target object, wherein the target object is an initial object corresponding to the target object electronic label.

2. The target object determination method according to claim 1, wherein the object attribute information of the initial objects is object locations of the initial objects; and
correspondingly, determining, according to the current location and the object attribute information of the initial objects, the target object electronic label of the target object whose distance to the current location falls within the preset distance range comprises:
determining distances to the initial objects according to the current location and the object locations of the initial objects; and
determining an initial object whose distance falls within the preset distance range as the target object, and determining the target object electronic label corresponding to the target object.

3. The target object determination method according to claim 1, wherein the object attribute information of the initial objects is label locations of initial object electronic labels corresponding to the initial objects; and
correspondingly, determining, according to the current location and the object attribute information of the initial objects, the target object electronic label of the target object whose distance to the current location falls within the preset distance range comprises:
determining distances to the initial object electronic labels according to the current location and the label locations of the initial object electronic labels; and
determining an initial object electronic label whose distance falls within the preset distance range as the target object electronic label of the target object, wherein the target object is an initial object corresponding to the target object electronic label.

4. The target object determination method according to claim 1, wherein determining, in response to the object selection instruction, the current location according to the positioning electronic label comprises:
scanning, in response to an object selection instruction sent by a server side, an anchor beacon signal emitted by the positioning electronic label, and determining the current location according to a label location of the positioning electronic label and the anchor beacon signal.

5. The target object determination method according to claim 4, wherein determining the current location according to the label location of the positioning electronic label and the anchor beacon signal comprises:
determining a distance to the positioning electronic label according to the label location of the positioning electronic label and the anchor beacon signal; and
determining the current location according to the distance to the positioning electronic label.

6. The target object determination method according to claim 1, wherein after determining the target object electronic label of the target object whose distance to the current location falls within the preset distance range, the method further comprises:
sending label attribute information of the target object electronic label to a server side, to cause the server side to send a guiding instruction to the target object electronic label according to the label attribute information, so as to cause the target object electronic label to guide, according to the guiding instruction and in a preset guiding manner, the user to select the target object.

7. The target object determination method according to claim 1, wherein after sending the guiding instruction to the target object electronic label, to cause the target object electronic label to guide, according to the guiding instruction and in the preset guiding manner, the user to select the target object, the method comprises:
scanning the target object to obtain object attribute information of the target object;
performing verification on the target object according to the object attribute information of the target object; and
sending an end instruction to the target object electronic label corresponding to the target object in a case that the verification succeeds, to cause the target object electronic label corresponding to the target object to complete, according to the end instruction and in a preset end manner, selection of the target object by the user.

8. The target object determination method according to claim 7, wherein after performing verification on the target object according to the object attribute information of the target object, the method further comprises:
sending the object attribute information of the target object to a server side in a case that the verification succeeds, to cause the server side to send, according to the object attribute information of the target object, an end instruction to the target object electronic label corresponding to the target object, so as to cause the target object electronic label corresponding to the target object to complete, according to the end instruction and in a preset end manner, selection of the target object by the user.

9. The target object determination method according to claim 1, wherein sending the guiding instruction to the target object electronic label, to cause the target object electronic label to guide, according to the guiding instruction and in the preset guiding manner, the user to select the target object comprises:
sending the guiding instruction to the target object electronic label, to cause the target object electronic label to turn on, according to the guiding instruction, a guiding indicator to guide the user to select the target object.

10. A target object determination method, applied to a server side, comprising:
sending an object selection instruction to an object scanning device, to determine a positioning electronic label that is determined by the object scanning device in response to the object selection instruction;
determining a current location of the object scanning device according to the positioning electronic label, wherein the object selection instruction carries object attribute information of initial objects;
determining, according to the current location of the object scanning device and the object attribute information of the initial objects, a target object electronic label of a target object whose distance to the current location of the object scanning device falls within a preset distance range, wherein the target object is any object in the initial objects; and
sending a guiding instruction to the target object electronic label, to cause the target object electronic label to guide, according to the guiding instruction and in a preset guiding manner, a user to select the target object, wherein the target object is an initial object corresponding to the target object electronic label.

11. The target object determination method according to claim 10, wherein the object attribute information of the initial objects is object locations of the initial objects; and
correspondingly, determining, according to the current location of the object scanning device and the object attribute information of the initial objects, the target object electronic label of the target object whose distance to the current location of the object scanning device falls within the preset distance range comprises:
determining distances between the current location of the object scanning device and the initial objects according to the current location of the object scanning device and the object locations of the initial objects; and
determining an initial object whose distance falls within the preset distance range as the target object, and determining the target object electronic label corresponding to the target object.

12. The target object determination method according to claim 10, wherein determining the current location of the object scanning device according to the positioning electronic label comprises:
determining, according to a label location of the positioning electronic label and an anchor beacon signal emitted by the positioning electronic label, a distance between the object scanning device and the positioning electronic label, wherein the anchor beacon signal emitted by the positioning electronic label is scanned and sent by the object scanning device; and
determining the current location of the object scanning device according to the distance between the object scanning device and the positioning electronic label.

13. The target object determination method according to claim 10, wherein after sending the guiding instruction to the target object electronic label, to cause the target object electronic label to guide, according to the guiding instruction and in the preset guiding manner, the user to select the target object, the method further comprises:
receiving object attribute information of the target object sent by the object scanning device;
performing verification on the target object according to the object attribute information of the target object; and
sending an end instruction to the target object electronic label corresponding to the target object in a case that the verification succeeds, to cause the target object electronic label corresponding to the target object to complete, according to the end instruction and in a preset end manner, selection of the target object by the user.

14. A target object determination apparatus, applied to an object scanning device, comprising:
a location determining module, configured to determine, in response to an object selection instruction, a current location according to a positioning electronic label, wherein the object selection instruction carries object attribute information of initial objects;
a label determining module, configured to determine, according to the current location and the object attribute information of the initial objects, a target object electronic label of a target object whose distance to the current location falls within a preset distance range, wherein the target object is any object in the initial objects; and
an object selecting module, configured to send a guiding instruction to the target object electronic label, to cause the target object electronic label to guide, according to the guiding instruction and in a preset guiding manner, a user to select the target object, wherein the target object is an initial object corresponding to the target object electronic label.
